# EUROPEAN PATENT SPECIFICATION

(11) **EP 2 711 258 B1**
(45) Date of publication and mention of the grant of the patent: **27.12.2017**
(21) Application number: 13167159.6
(22) Date of filing: 09.05.2013
(51) Int. Cl.: B60T 17/08, F16D 65/28

(54) **Internal breathing system for spring brake actuator type diaphragm-piston**
Internes Belüftungssystem für Federspeicherbremszylindermembrankolben
Système de respiration interne pour diaphragme-piston de type actionneur de frein à ressort

(30) Priority: 24.09.2012 TR 201210875
(43) Date of publication of application: 26.03.2014
(73) Proprietor: Kancioglu Otomotiv Sanayi Ve Ticaret Anonim Sirketi, Istanbul (TR)
(72) Inventor: Kancioglu, Ilhan, ISTANBUL (TR); Kancioglu, Mehmet Ali, ISTANBUL (TR)
(74) Representative: Dereligil, Ersin

(56) References cited:
- WO-A1-2004/002799
- WO-A1-2007/062869
- WO-A2-2009/085024
- GB-A- 1 237 641
- GB-A- 2 064 651

## Description

### Technical Field

The invention relates to the brake system in vehicles.

The invention especially relates to the Diaphragm-Piston(D/P) type brake actuators used for M (carriage of passengers), N (carriage of goods) and O (trailers) type of vehicles categorized in automotive sector.

### State of the Art

Nowadays, the brake system is the most important part of the vehicles. Actually the brake system is energy conversion system that converts the potential energy produced by a compressed air / oil to kinetic energy. Tons of pressure is applied through each brake actuator. An additional power is accumulated also in the governor by a motor power in the modern systems.

Brake system consists mainly: Governor, which is aligned with the steering wheel connected to footh brake pedal directly and pneumatic pressure to be converted to a mechanical energy is accumulated in the system by means of a valve controlled by that pedal. High pressure "steel pipes" and "flexible hose"s connect the governor to the each brake actuators. "An hydrolic system" or an "air compressor" generates hydrolic/pneumatic pressure necessary for braking action and designed to operate in heavy conditions. "The front and the rear brake linings (pads)" are pushed by brake actuators and than brakes the vehicle by means of a friction on "the drum or the disc".

In vehicles, the pneumatic systems converting the compressed air generated by an air compressor to mechanical power whenever the driver wants and what level the driver pushes the brake pedal is called "brake chamber".

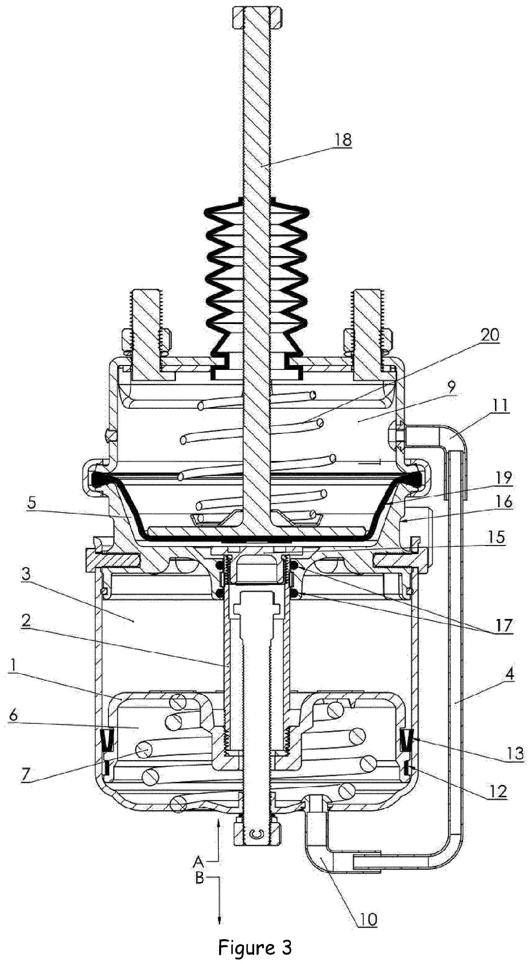

In the market, the known technique for breathing in the brake chambers type Diaphragm/Piston is to apply an external pipe that connects the spring compression area (6) to the atmospheric area (9) (Figure.3) or an internal system accomplished by check-valves connects the pressurized room (3) to the service pressurized room (5) Some of the manufacturers in the market apply check-valves either on the side wall at the piston pipe or below the cap or on the piston to direct the air transfer between the service room and spring compression area in both direction to overcome the negative aspects rasing from the use of external breathing pipe.

WO2004002799A1 is an example from the literature of the related technical field. The invention said in this application relates to a breathing device which comprises a first valve (50, 40, 34, 14, 15), which is arranged inside a combined spring-loaded brake cylinder (1) and service brake cylinder (2) and which, when the pressure medium chamber (4) of the spring-loaded brake cylinder (1) is relieved from pressure, causes a breathing of the spring chamber (9) of the spring-loaded brake cylinder (1) from the pressure medium chamber (22) of the service brake cylinder (2).

The breathing pipe used extarnally in the brake chamber, generally is taken out by workman unconsciously to achieve the brake chamber easily mounted or it may be gone out because of heavy road condition so, dirts and sludges comes thru the spring compression area and causes the piston seal damaged that results especially in the performance loss of the spring brake (Figure.3)

### The Purpose of the Invention

One of the purpose of this invention is to achieve the breathing system internally by means of the built-in holes on the aluminium piston pipe to eliminate the deficits caused by technics already applied.

The another purpose of this invention is to reduce the cost of material and workmanship in comparison with the other systems use check-valves to manage the breathing action internally.

The another purpose of this invention is to make the system adoptation practical.

The another purpose of this invention is to make the system adoptation economic.

The another purpose of this invention is to make the service life of the brake chamber more.

The invention, providing all the advantages stated above, is related to the brake chamber type Diaphragm/Piston used for the vehicles types M(carriage of passengers), N(carriage of goods) and O(trailers) to provide the breathing internally between "spring compression area" and service room while spring brake action that is thru "spring compression area" to brake on or otherwise thru service room to brake off.

### Description of the Figures

Figure 1 General sectional view consists invention,
Figure 2 Detail sectional view of the invention,
Figure 3 General sectional view of the technical already applied.

### Description of the Reference Numbers

| **Ref. No** | **Ref. Name** |
|---|---|
| 1. | Piston |
| 2. | Pipe(Aluminium) |
| 3. | Pressurized spring room |
| 4. | Breathing pipe |
| 5. | Pressurized service room |
| 6. | Spring compression area |
| 7. | Spring |
| 8. | Air transfer holes |
| 9. | Atmospheric area |
| 10. | Plastic elbow |
| 11. | Plastic elbow |
| 12. | Bearing |
| 13. | Seal |
| 14. | Air channel |
| 15. | Cap |
| 16. | Inlet body(Aluminium) |
| 17. | O-ring |
| 18. | Push rod |
| 19. | Diaphragm |
| 20. | Return spring |
| A, B | Direction |

### Detailed Description of the Invention

The invention is related to the Diaphragm-Piston(D/P) type brake actuators used for M(carriage of passengers), N(carriage of goods) and O(trailers) type of vehicles and consists air transfer holes (8) provide the breathing action internally.

The Mechanism - Prior Art:
While the vehicle stops the spring brake is active(on) and the service brake is passive(off). The spring (7) is in the released position in B-A direction and the air pressure in both the pressurized service room (5) and the pressurized spring room (3) as in the whole brake system is 0 (zero). The air compressor starts to produce necessary air pressure when the engine of the vehicle starts to work on than the system transfers the pressurized air to the pressurized spring room (3) and pressurized air compresses the spring (7) that is to said the spring brake is off. In this condition, the spring brake command lever is released that is off however the service brake is to be applied by means of foot pedal whenever you want.

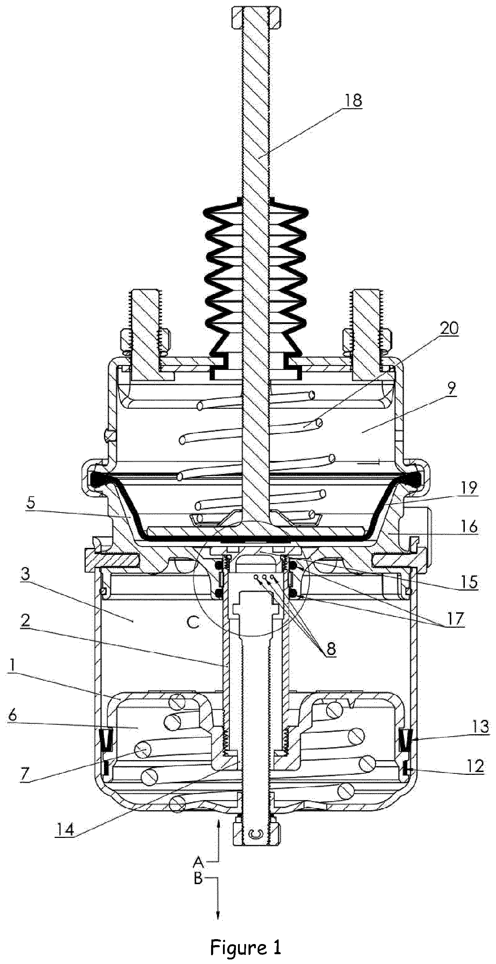

The air compressor supplies pressurized air to the system as the vehicle engine and the compressor works. Service brake starts to brake when the push rod (18) moves in B-A direction by means of the diaphragm (19) activated by pressurized air transferred to pressurized service room (5) with the help of foot pedal. Spring brake starts to brake together with the pressurized air in the pressurized spring room (3) starts to exhaust by a control valve than the spring (7) releases in the B-A direction and the piston pipe (2) pushes the push rod (18) together with diaphragm (19) when the vehicle is parked(by hand lever). The diaphragm (19) in the pressurized service room (5) pushes the push rod (18) as the spring (7) is released in the B-A direction since there is no reverse pressure power in the atmospheric area (9) and so generates brake power (Figure 1).

The vacuum in the spring compression area (6) arised by the spring (7) released in the B-A direction is prevented by the breathing pipe (4) connected between spring compression area (6) and atmospheric area (9) and so the spring (7) easily moves in the B-A direction. While the spring (7) compression in A-B direction, the compressed air in the spring compression area (6) generated by the pressurized air transferred to the pressurized spring room (3) (that is release of hand lever to brake off) is transferred to the atmospheric area (9) thru breathing pipe(4) and so the spring (7) easily moves in A-B direction as compressed.

The Mechanism - New Art:
General sectional view of the invention is shown in Figure 1. The piston (1) shown in the figure compress the spring (7) by means of the pressurized air transferred in the pressurized spring room (3). The piston pipe (2) transfers the brake power to the push rod (18) generated by the spring (7) and preferred to made with aluminium. The pressurized spring room (3) is the section in that the pressurized air necessary to compress the spring (7) is held.

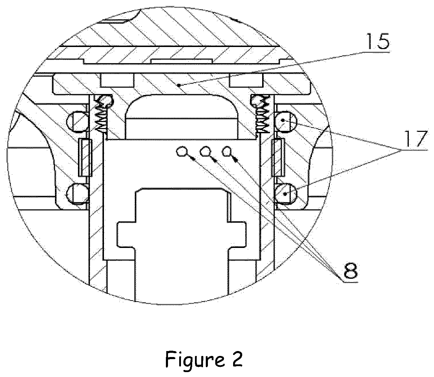

As shown in Figure 3, the breathing pipe (4) provides the exhaust of the air in the spring compression area (6) while parking off. The pressurized service room (5) is the section in that pressurized air necessary for service braking is transferred. The spring compression area (6) is the section that the spring (7) movement is limited in that. The spring (7) generates the necessary brake power when parking or in emergency. The air transfer holes (8) transfer the air from spring compression area (6) to pressurized service room (5) while spring (7) compression (parking off) whereas transfer the air from pressurized service room(5) to spring compression area (6) while parking (Figure 1&2), so the holes (8) perform the breathing internally as the breathing pipe (4) performs externally.

The push rod (18) moves in the atmospheric area (9) towards A-B direction while braking action and so transmits the brake power. The diaphragm (19) transmits the power generated by means of pressurized air in the pressurized service room (5) to the push rod (18). The return spring (20) pushes back the diaphragm (19) after the service brake off.

The bearing(12) supports the piston(1) while sliding in A-B direction as shown in Figure 1. The seal (13) provides the impermeability between the pressurized spring room (3) and spring compression area (6) while the piston(1) moves in A-B direction.

The air transfer between the spring compression area (6) and the pressurized service room (5) is through air channel (14) for internal breathing action to eliminate external breathing pipe(4). The air connection between the spring compression area (6) and the pressurized service room (5) is prevented by a cap (15) while the spring brake off (Figure 1). The section, the air inlets for the pressurized service room (5) and pressurized spring room (3) are placed on is called as the inlet body (16). The o-rings (17) provide impermeability between the pressurized service room (5) and the pressurized spring room (3) while the aluminium piston pipe (2) moves in both direction (Figure 2).

The breathing action between the spring compression area (6) and the pressurized service room(5) while spring brake off and on is achieved internally by this invention. The breathing action was provided by means of an external pipe (4) between the spring compression area (6) and the atmospheric area (9) in the prior art (Figure 3).

The air transfer holes (8) as shown in Figures 1&2 are closed in the position between the o-rings (17) on the inlet body (16) while the spring (7) is compressed. The spring (7) causes the air transfer holes (8) to open by means of the piston pipe (2) movement in B-A direction (because of that the pressurized air in the pressurized room (3) is exhausted) and so the air connection between the spring compression area (6) and pressurized service room (5) makes the spring (7) easily released since the vacuum is prevented. In reverse (while parking off by transferring the pressurized air to pressurized room (3)) the air transfer holes (8) transfer the air from the spring compression area (6) to the pressurized service room (5) with the movement of the piston pipe (2) in A-B direction up to the position the holes (8) to be closed that is all to make the spring (7) easily compressed.

## Claims

1. A Diaphragm-Piston (D/P) type brake chamber
- used for M (carriage of passengers), N (carriage of goods) and O (trailers) type of vehicles categorized in automotive sector and
comprising;
- a pressurized spring room (3);
- a spring (7) which releases in the B-A direction when the pressurized air in the pressurized spring room (3) starts to exhaust by a control valve or which compresses in the A-B direction when the pressurized air is transferred to the pressurized spring room (3);
- a piston pipe (2) which transfers the brake power to the push rod (18) generated by the spring (7);
- a cap (15) which prevents the air connection between a spring compression area (6) and a pressurized service room (5) while the spring (7) brake off
and said brake chamber **characterized in** further comprising;
- air transfer holes (8) in the side wall at the end of the piston pipe (2) provide the air transfer between a spring compression area (6) and a service room (5) internally while spring braking off and braking on and
- said piston pipe (2) is made of aluminum material.

2. The brake chamber according to claim 1, **characterized in that**; said air transfer holes (8) are closed in a position between o-rings (17) on an inlet body (16) section while the spring (7) compressed.

3. The brake chamber according to claim 1; **characterized in that**; the movement of the piston pipe (2) in B-A direction ensures the transfer holes (8) open in order to prevent the vacuum in said spring compression area (6) by exhausting air from the pressurized spring room (3) that makes the spring (7) easily uncaged.

4. The brake chamber according to claim 1; **characterized in that**; the compressed air by the movement of the piston pipe (2) in A-B direction transfers from the spring compression area (6) to the service room (5) thru the transfer holes (8) up to closed so the spring (7) easily caged.

## Patentansprüche

1. Bremszylinder vom Membran-/Kolben-Typ,
welcher für die Fahrzeugtypen M (Passagierbeförderung), N (Güterbeförderung) und 0 (Anhänger), welche in der Automobilbranche kategorisiert werden, verwendet wird und Folgendes umfasst;
einen mit Druck beaufschlagten Federraum (3);
eine Feder (7), welche in der B-A-Richtung auslöst, wenn die mit Druck beaufschlagte Luft im mit Druck beaufschlagten Federraum (3) beginnt, durch ein Regelventil auszutreten, oder welches in der A-B-Richtung komprimiert, wenn die mit Druck beaufschlagte Luft in den mit Druck beaufschlagte Federraum (3) übertragen wird; ein Kolbenrohr (2), welches die Bremskraft, welche von der Feder (7) erzeugt wird, auf die Schubstange (18) überträgt;
eine Kappe (15), welche die Luftverbindung zwischen einem Federkompressionsbereich (6) und einem mit Druck beaufschlagten Leistungsraum (5) verhindert, während die Feder- (7) -bremse deaktiviert ist,
und der Bremszylinder ist **dadurch gekennzeichnet, dass** er ferner Folgendes umfasst; Luftübertragungslöcher (8) in der Seitenwand am Ende des Kolbenrohrs (2), welche intern die Luftübertragung zwischen einem Federkompressionsbereich (6) und einem Leistungsraum (5) bereitstellen, während die Federbremsung deaktiviert und aktiviert ist, und
das Kolbenrohr (2) besteht aus Aluminiummaterial.

2. Bremszylinder nach Anspruch 1, **gekennzeichnet dadurch, dass**; die Luftübertragungslöcher (8) in einer Position zwischen O-Ringen (17) an einem Abschnitt eines Einlasskörpers (16) geschlossen sind, während die Feder (7) komprimiert ist.

3. Bremszylinder nach Anspruch 1; **gekennzeichnet dadurch, dass**; die Bewegung des Kolbenrohrs (2) in B-A-Richtung gewährleistet, dass die Übertragungslöcher (8) geöffnet sind, um ein Vakuum im Federkompressionsbereich (6) durch Abgeben von Luft aus dem mit Druck beaufschlagten Federraum (3) zu verhindern, was die Feder (7) problemlos befreit.

4. Bremszylinder nach Anspruch 1; **gekennzeichnet dadurch, dass**; die durch die Bewegung des Kolbenrohrs (2) in A-B-Richtung komprimierte Luft vom Federkompressionsbereich (6) in den Leistungsraum (5) durch die Übertragungslöcher (8) übergeht, bis sie geschlossen sind, sodass die Feder (7) problemlos eingefangen ist.

## Revendications

1. Chambre de frein de type diaphragme-piston (D/P)
utilisée pour les véhicules de type M (transport de passagers), N (transport de marchandises) et O (remorques) classés dans le secteur automobile et comprenant ;
une cavité à ressort sous pression (3) ;
un ressort (7) se relâchant selon la direction B-A lorsque l'air sous pression dans la cavité à ressort sous pression (3) commence à s'évacuer par une soupape de régulation, ou se comprimant dans la direction A-B lorsque l'air sous pression est transféré à la cavité à ressort sous pression (3);
un conduit de piston (2) qui transfère la puissance de freinage générée par le ressort (7) à la tige poussoir (18) ;
un bouchon (15) empêchant un raccord d'air entre une zone de compression de ressort (6) et une cavité de service sous pression (5) tandis que le frein à ressort (7) n'est pas activé et ladite chambre de frein étant **caractérisée**, en comprenant en outre ;
des trous de transfert d'air (8) dans la paroi latérale à l'extrémité du conduit de piston (2) assurant le transfert d'air en interne entre une zone de compression de ressort (6) et une cavité de service (5) hors freinage à ressort et lors du freinage à ressort et
ledit conduit de piston (2) étant constitué de matériau en aluminium.

2. Chambre de frein selon la revendication 1, **caractérisée en ce que** lesdits trous de transfert d'air (8) sont fermés dans une position entre les joints toriques (17) sur une section de corps d'entrée (16) tandis que le ressort (7) est comprimé.

3. Chambre de frein selon la revendication 1, **caractérisée en ce que** le mouvement du conduit de piston (2) selon la direction B-A entraîne l'ouverture des trous de transfert (8) pour empêcher une dépression dans ladite zone de compression de ressort (6) en évacuant ainsi l'air de la cavité de ressort sous pression (3) ce qui permet au ressort (7) d'être facilement libéré.

4. Chambre de frein selon la revendication 1, **caractérisée en ce que** l'air comprimé à l'aide du mouvement du conduit de piston (2) selon la direction A-B est transféré de la zone de compression de ressort (6) jusqu'à la cavité de service (5) à travers les trous de transfert (8) jusqu'à leur fermeture pour que le ressort (7) se comprime facilement.
